# EUROPEAN PATENT SPECIFICATION

(11) **EP 1 650 425 B1**
(45) Date of publication and mention of the grant of the patent: **11.06.2008**
(21) Application number: 04256440.1
(22) Date of filing: 20.10.2004
(51) Int. Cl.: F02M 25/08

(54) **Liquid trap volume compensator**
Volumenkompensator mit Flüssigkeitsfalle
Compensateur de volume avec piège de liquide

(43) Date of publication of application: 26.04.2006
(73) Proprietor: Delphi Technologies, Inc., Troy, MI 48007 (US)
(72) Inventor: Niewiadomski, Maciej, 30-809 Krakow (PL); Loevenbruck, Remi, Athus B-6791 (BE); Abidi, Mostafa, Luxembourg 2263 (LU); Zuchara, Pawel, Staszow, 28-200 (PL); Krawiec, Zbigniew, 30-826 Krakow (PL)
(74) Representative: Jones, Keith William

(56) References cited:
- WO-A-95/08059
- US-A- 4 655 189
- US-A- 4 658 796
- US-A- 5 173 095
- US-A- 5 641 344

## Description

The present invention relates to a canister for filtering fuel vapour in the venting loop of a fuel system, provided with a container for a filter material, such as activated carbon, the canister comprising a connection for an inlet line for guiding fuel vapour towards the canister, and a connection for an outlet line for purging fuel vapour from the canister, and a liquid trap for collecting liquid transported towards the canister via the inlet line.

The main function of evaporative canisters, as part of a fuel system, is to avoid vapour to escape by adsorbing HC coming from the tank. The canister forms part of the venting loop of a fuel system and prevents HC to be vented into the atmosphere. In order to perform this function the canister is provided with an active component, such as activated carbon. This activated carbon catches HC which is present in the fuel vapour which is guided through the canister.

The capability of absorption of HC by the activated carbon is degraded in case the carbon comes into contact with liquid fuel. Therefore a canister is typically provided with a liquid trap to collect liquid fuel which is guided towards the canister via the inlet line.

A canister according the prior art, being similar to those disclosed in WO 95/08059 and US 5 641 344, is shown in Figure 1. The canister 1 is also provided with a connection 9 for connecting a purge line for purging the activated carbon 3.

The canister 1 is provided with a canister body 2. The canister body 2 forms a container for receiving activated carbon 3. The activated carbon 3 at the top end thereof is covered by means of a layer 4, which allows the passing of a fuel vapour. The routing of the fuel vapour towards the activated carbon is indicated by a dotted line 5. In order to assure that only fuel vapour is guided towards the activated carbon 3, and liquid fuel is not guided towards the activated carbon 3, a liquid trap 6 is welded to the canister body 2. As schematically indicated by line 7, liquid fuel can be received in the liquid trap 6. The liquid trap volume can vary, according to the orientation. In order to guide the fuel vapour 5 towards the activated carbon 3, the fuel trap 6 is provided with a connection 8 for connecting an inlet line from the fuel system to the canister 1.

A disadvantage of the canister according to the prior art is the fact that the liquid trap has to be welded to the canister body as an additional part. An object of the present invention is to provide a canister according to the introduction, provided with a fuel trap, without the need of a welding operation to provide the liquid trap to the canister.

This object is achieved in that the liquid trap is positioned inside the canister body. A further advantage of avoiding a welding operation is that potential leaks on the welding joint are eliminated. The fact that no potential leaks can be created since there is no longer a welded zone is extremely important for the functioning of the canister.

According to the present invention it is possible that the fuel trap essentially has the form of a box, the box having a first opening for connecting the inlet line to the fuel trap and a second opening for releasing the fuel vapour towards the filter material.

The fuel trap according to the present invention could be provided by positioning a fuel trap in the form of a reservoir, for instance by press-fit, inside the canister body. Because of the position of the fuel trap inside the canister body an additional welding operation to provide the fuel trap to the canister can be avoided.

According to the present invention it is possible that the canister body is formed of a first material and the fuel trap is formed of a second material.

The fact that the fuel trap no longer has to be welded to the canister body enables the design of a canister having a canister body formed of a first material which is suitable for avoiding permeation of fuel vapour. The fuel trap could be formed of a different material which is especially suitable for avoided permeation of liquid fuel. The liquid trap could be formed of a low-permeation material like POM or another suitable low-permeation material, such as a suitable plastic, steel or glass or other material capable of retaining fuel. This enables to reduce the overall canister emission without requesting the change of the material of the canister body itself.

According to the present invention a canister is provided with pressure means for exerting pressure on the filter material in order to improve the packing thereof, the pressure means comprising tension means, such as a spring, and a plate to apply a pressure to the filter material, wherein the fuel trap is integral with the plate, in that the plate is adapted to receive liquid.

Moreover, it is possible that the plate is formed as a cup or tank.

The pressure means provides volume compensation means in order to assure a reasonable packing of the filter material in case of canister body volume variations. These volume variations are due to thermal and chemical expansion of the canister parts or are due to mechanical effects, such as vibration and shocks exerted on the canister.

According to the invention the volume compensation means comprise a plate for transferring the pressure to the filter material, in order to thereby ensure a reasonable packing of the filter material. By designing the plate in the form of a cup or tank, the plate is capable of receiving liquid fuel and therefore provides the liquid trap.

According to the present invention is possible that the canister comprises a foam layer, wherein the foam layer with one side thereof adjoins the plate and with the opposite side thereof adjoins the filter materials.

Moreover it is possible that the plate is provided with distant means in order to create an open space between the foam layer and the surface of the plate adjoining the foam layer.

According to the present invention it is possible that the liquid trap has the form of an adsorbent material adapted to allow the fuel vapour to pass through the adsorbent material and to allow the liquid to be captured in the adsorbent material.

The present invention will now be described, with reference to the accompanying drawings, in which:
Figure 1 shows a canister and a fuel trap according to the prior art.
Figure 2 shows a first example of a canister with an internal fuel trap.
Figure 3 shows a part of the canister according to Figure 2 in cross-section according to line A-A.
Figure 4 shows a second example of a canister with an internal fuel trap
Figure 5 shows a third example of a canister with an internal fuel trap.
Figure 6 shows a canister provided with volume compensation means in order to improve the packing of the filter material.
Figure 7 shows a canister according to the present invention
Figure 8 shows a canister according to the present invention with a liquid trap in the form of an adsorbent material.

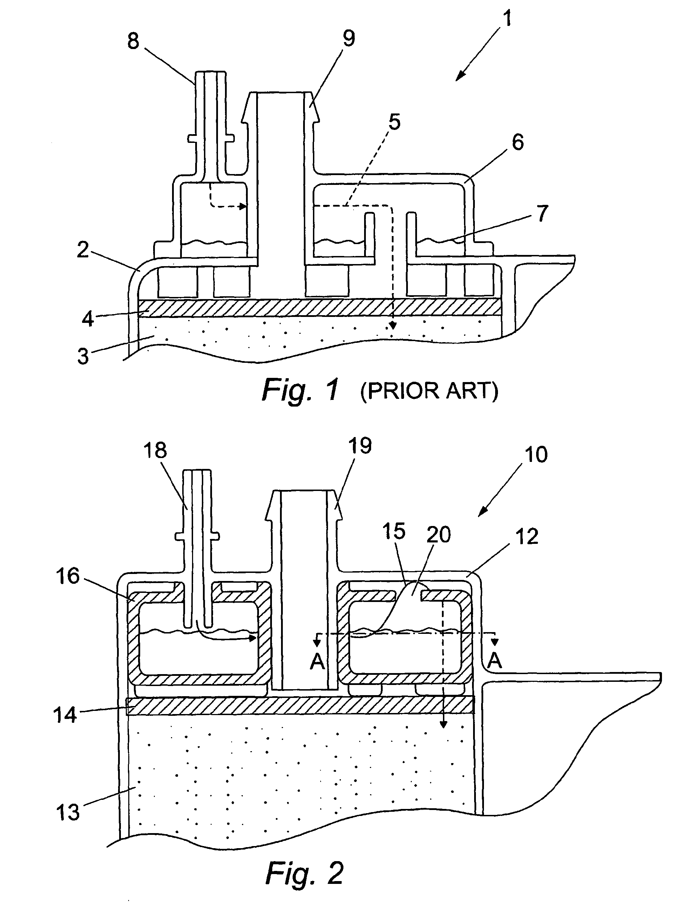

Figure 2 shows a canister 10 provided with a canister body 12 which forms a container for an active carbon 13. The active carbon at the top end thereof is covered with a layer 14, which layer allows the passage of a fuel vapour 15. The fuel vapour 15 is guided towards the canister via a connection 18 for connecting an inlet line. As clearly shown in Figure 2, the canister body 12 is provided with an internal liquid trap 16. The liquid trap 16 has the form of a reservoir which is for instance by press-fitting, provided inside the canister body 12. The liquid trap 16 is leak-tight connected to the end part of the connection 18. The liquid trap 16 is provided with an opening 20 for allowing the passage of the fuel vapour from the liquid trap 16 towards the activated carbon 13. The liquid trap 16 could be formed by any appropriate means such as injection moulding, blow moulding of thermoforming. The liquid trap 16 could be formed from HDPE. Alternatively, the liquid trap 16 could be formed from a low permeation material like POM or an appropriate plastic, steel or glass. Since the canister body 12 is only subject to permeation of fuel vapour, the canister body itself could be formed from PP or PA.

The canister 10 is also provided with a connection 19 for connecting a purge line to the canister.

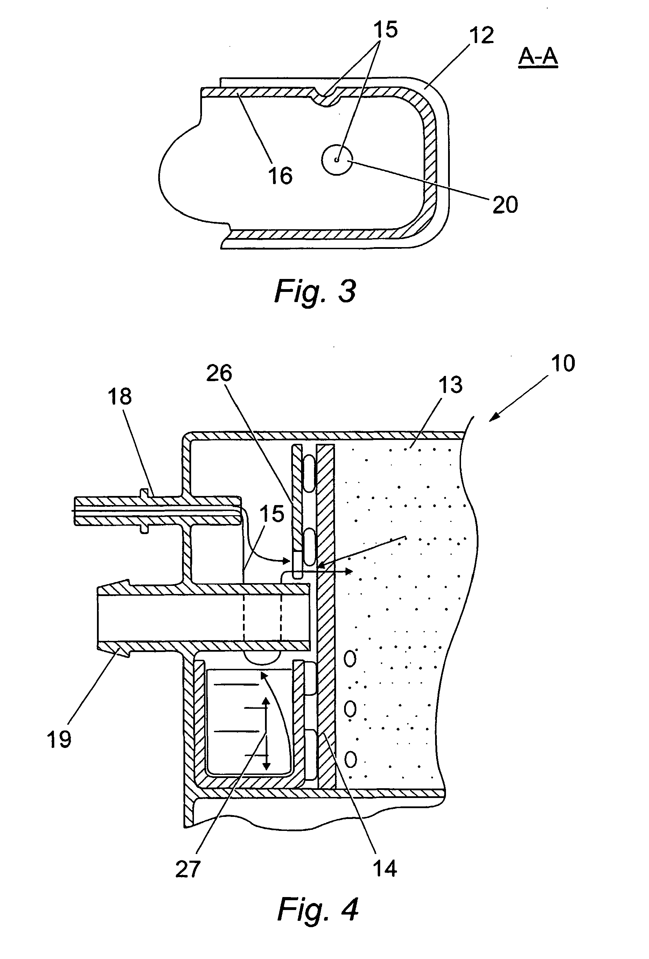

Figure 3 shows in cross-section part of the liquid trap 16 and the canister body 12 according to line A-A as shown in Figure 2. In Figure 3 it is shown that the opening 20 allows the passage of the fuel vapour 15.

Figure 4 shows an alternative example of a canister. The canister 10 is adapted to be used in a position wherein the connections 18 and 19 in respect of inlet net line and the purge line are essentially in a horizontal position. The internal liquid trap 26 is adapted to receive liquid fuel in the bottom part thereof. With reference number 27, the maximum height of the liquid level inside the liquid trap 26 is indicated.

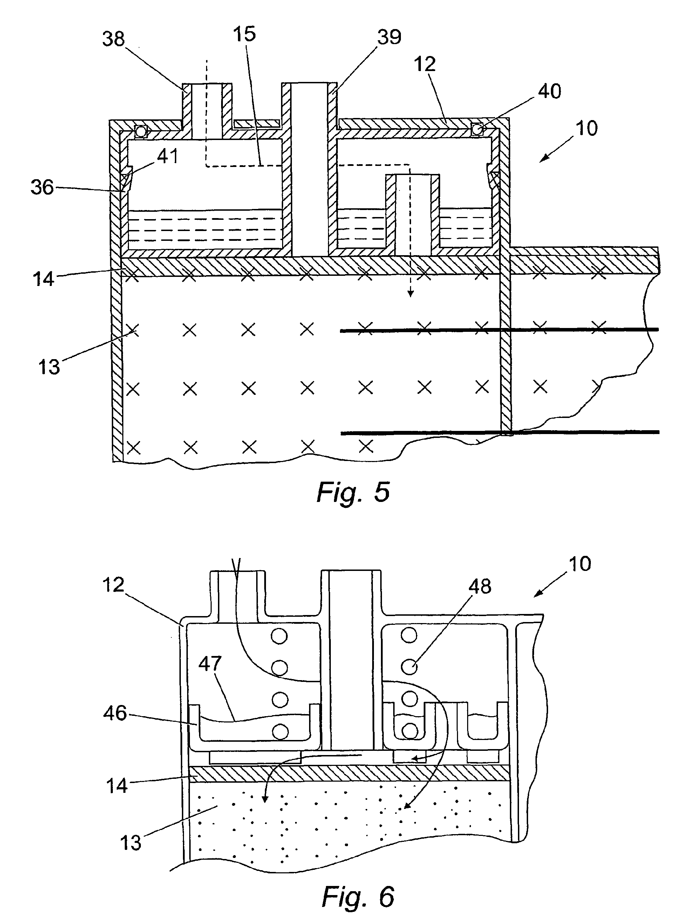

In Figure 5 a further alternative example is shown of the canister 10. The canister body 12 is provided with activated carbon 13 at the top end thereof covered with a layer 14. Inside the canister body 12 an internal liquid trap 36 is positioned. The internal liquid trap 36 is formed integral with the connection 38 occurring in that line and connection 39 for a first purge line.

In order to improve the connection of the internal liquid trap 36 inside the canister body 12, a sealing O-ring 40 and a latch 41 are provided.

In Figure 6 a further example of the canister 10 is shown. The canister body 12 is provided with activated carbon 13 at the top end thereof covered with a layer 14. Inside the canister body 12 an internal liquid trap 46 is provided with a line 47 schematically the level of the liquid collected inside the liquid trap 46 as indicated.

In the example or according to Figure 6 spring means in the form of a spring 48 are present. By means of the spring 48 and the internal liquid trap 46 a pressure can be exerted on the activated carbon 13 in order to improve the packing thereof. It is known in the prior art to provide a plate and a spring in order to provide volume compensating means. The combination of an internal liquid trap 46 and a spring 48 provides both the liquid trap for the canister and the volume compensation means for the canister.

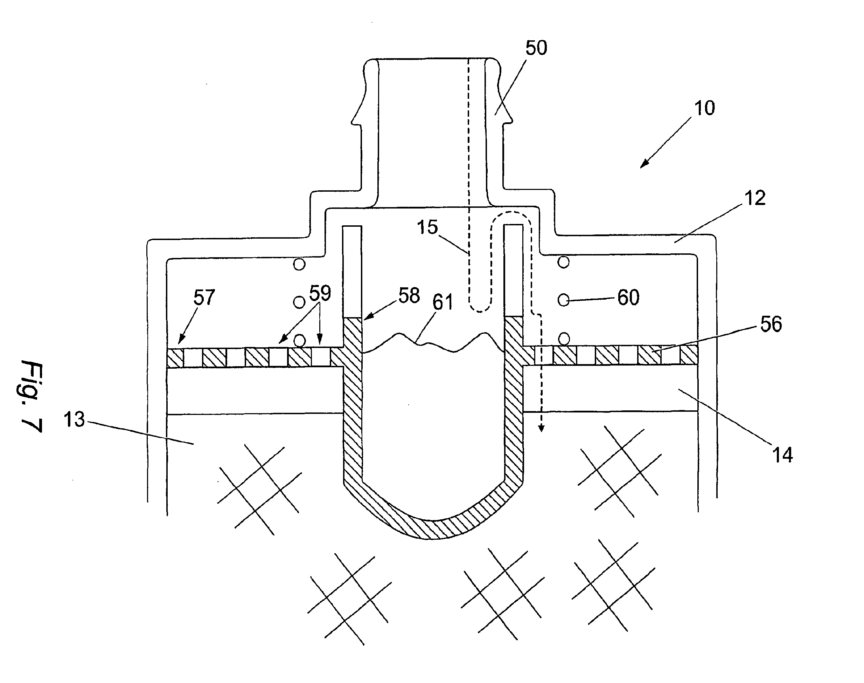

The combination of volume compensation means and an internal liquid trap according to the invention as in the appended claims is shown in Figure 7. The canister 10 according to Figure 7 comprises a canister body 12 having one connection 50 for an inlet net line and/or a purge line. The canister body 10 is provided with activated carbon 13 at a top end thereof covered with a layer 14. On top of the layer 14 an internal liquid trap 56 is provided.
The internal liquid trap 56 comprises a plate-like element 57 and a container-like element 58. The plate-like element 57 is provided with openings 59 in order to allow the passage of a fuel vapour 15. The internal liquid trap 56 operates in co-operation with a spring 60 in order to exert a pressure on the activated carbon 13 inside the canister body 12. By exerting the pressure the packing of the activated carbon can be improved. The container-like element 58 of the internal liquid trap 56 is provided to collect liquid. By means of the line 61 schematically the level of liquid collected inside the internal liquid trap 56 is indicated.

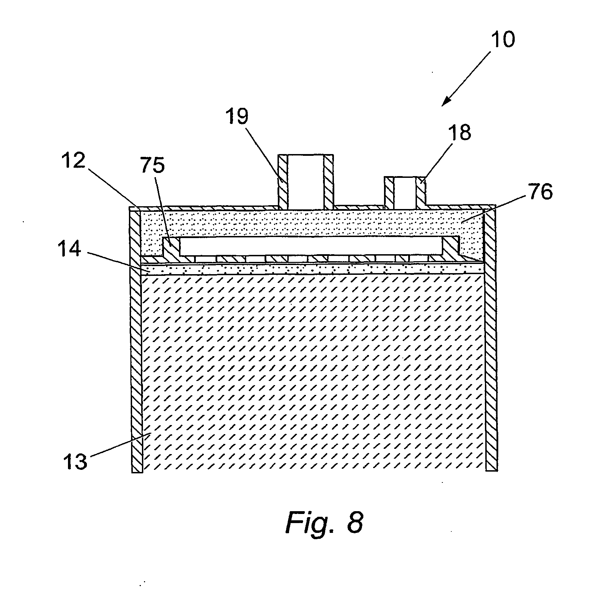

Figure 8 shows a further alternative embodiment of the canister 10 according to the present invention. The canister 10 comprises a canister body 12 forming a container for a filter material 13 such as activated carbon. At the top end thereof the carbon is covered by means of a foam layer 14. At the foam layer a spacer 75 is positioned. Between the wall of the canister body 12 and the spacer 75 a liquid trap 76 is present in the form of an adsorbent material. This adsorbent material could comprise any suitable material which is able to allow the fuel vapour guided towards the canister 10 via the connection 18 to pass through the liquid trap 76 towards the activated carbon 13. At the same time the adsorbent material 76 should be capable of capturing the liquid fuel which is transported towards the canister 10 via the inlet line.

Because of this embodiment, all liquid in the flow directed towards the canister 10 is captured in the adsorbent material 76 at the moment of inlet in the canister 10. Any liquid captured in the adsorbent material will migrate inside the material to a drier area. The adsorbent material 76 can be cleaned during purging, using a purging line which is to be connected to the connection 19 as shown in Figure 8.

One of the advantages of having an adsorbent material as a liquid trap is the fact that the liquid captured inside the material will evaporate faster from the adsorbent material 76 than it would evaporate from the surface of an amount of liquid present in a reservoir. The reason for this is the much bigger exchange area of the adsorbent material and the surrounding air.

Because of the adsorbent material the liquid trap volume can be reduced. There is a limited liquid action at the lower part of the adsorbent material 76. Contrary to existing canisters it is not necessary to have a separating wall surrounding the liquid trap, in order to reduce the risk of splashing of liquid fuel onto the activated carbon 13.

## Claims

1. Canister (10), for filtering fuel vapour in the venting loop of a fuel system, provided with a canister body (12) forming a container for filter material (13), such as activated carbon, the canister comprising a connection (18) for an inlet line for guiding fuel vapour towards the canister (10), and a liquid trap (16) for the collection of liquid transported towards the canister (10) via the inlet line the liquid trap being positioned inside the canister body (12) , wherein the canister (10) is provided with pressure means (48) for exerting pressure on the filter material (13) in order to improve the packing thereof, the pressure means (18) comprising tension means, such as a spring, and a plate (57) to transfer the pressure to the filter material (13) , **characterised by** the liquid trap (16) being integral with the plate (57) in that the plate (57) is provided with a container (58) for receiving liquid.

2. Canister, according to claim 1, wherein the fuel trap (16) essentially has the form of a box, the box having a first opening for connecting the inlet line to the fuel trap and a second opening for releasing the fuel vapour towards the filter material(13).

3. Canister according to claim 1 or 2, wherein the canister body (12) is formed of a first material and the fuel trap (16) is formed of a second material.

4. Canister according to claim 3, wherein the fuel trap (16) is formed of a low permeation material.

5. Canister according to any preceding claim, wherein the plate (57) is formed as a cup or tank.

6. Canister according to any preceding claim, wherein the canister (10) comprises a foam layer (14), wherein the foam layer (14) with one side thereof adjoins the plate (57) and with the opposite side thereof adjoins the filter materials.

7. Canister according to claim 6, wherein the plate (57) is provided with distant means in order to create an open space between the foam layer (14) and the surface of the plate (57) adjoining the foam layer (14).

8. Canister according to any preceding claim, wherein the liquid trap (16) has the form of an absorbent material adapted to allow the fuel vapour to pass through the absorbent material and to allow the liquid to be captured in the absorbent material.

9. Fuel system, comprising a canister according to any preceding claim.

## Patentansprüche

1. Ein Kanister (10) zum Filtern von Kraftstoffdampf in der Entlüftungsschleife eines Kraftstoffsystems, der mit einem Kanisterkörper (12), der einen Behälter für Filtermaterial (13), wie etwa Aktivkohle, bildet, bereitgestellt ist, wobei der Kanister eine Verbindung (18) für eine Zulaufleitung zum Führen von Kraftstoffdampf zu dem Kanister (10) und eine Flüssigkeitsfalle (16) zum Sammeln von Flüssigkeit, die über die Zulaufleitung zu dem Kanister (10) befördert wird, beinhaltet, wobei die Flüssigkeitsfalle Innerhalb des Kanisterkörpers (12) positioniert ist, wobei der Kanister (10) mit Druckmitteln (48) zum Ausüben von Druck auf das Filtermaterial (13), um die Abdichtung davon zu verbessern, bereitgestellt ist, wobei das Druckmittel (18) Spannmittel, wie etwa eine Feder, und eine Platte (57) beinhaltet, um den Druck auf das Filtermaterial (13) zu übertragen, **dadurch gekennzeichnet, dass** die Flüssigkeitsfalle (16) in die Platte (57) fest eingebaut ist, so dass die Platte (57) mit einem Behälter (58) zum Aufnehmen von Flüssigkeit bereitgestellt ist.

2. Kanister gemäß Anspruch 1, wobei die Kraftstofffalle (16) im Wesentlichen die Form eines Kastens aufweist, wobei der Kasten eine erste Öffnung zum Verbinden der Zulaufleitung mit der Kraftstofffalle und eine zweite Öffnung zum Freisetzen des Kraftstoffdampfes zu dem Filtermaterial (13) aufweist.

3. Kanister gemäß Anspruch 1 oder 2, wobei der Kanisterkörper (12) aus einem ersten Material gebildet ist und die Kraftstofffalle (16) aus einem zweiten Material gebildet ist.

4. Kanister gemäß Anspruch 3, wobei die Kraftstofffalle (16) aus einem Material mit geringer Permeation gebildet ist.

5. Kanister gemäß einem der vorhergehenden Ansprüche, wobei die Platte (57) als eine Schale oder ein Gefäß gebildet ist.

6. Kanister gemäß einem der vorhergehenden Ansprüche, wobei der Kanister (10) eine Schaumschicht (14) beinhaltet, wobei die Schaumschicht (14) mit einer Seite davon an die Platte (57) angrenzt und mit der gegenüberliegenden Seite davon an die Filtermaterialien angrenzt.

7. Kanister gemäß Anspruch 6, wobei die Platte (57) mit entfernten Mitteln bereitgestellt ist, um einen offenen Raum zwischen der Schaumschicht (14) und der Oberfläche der Platte (57), die an die Schaumschicht (14) angrenzt, zu schaffen.

8. Kanister gemäß einem der vorhergehenden Ansprüche, wobei die Flüssigkeitsfalle (16) die Form eines absorbierenden Materials aufweist, das angepasst ist, um zu ermöglichen, dass der Kraftstoffdampf durch das absorbierende Material hindurchgeht, und um zu ermöglichen, dass die Flüssigkeit in dem absorbierenden Material eingefangen wird.

9. Ein Kraftstoffsystem, das einen Kanister gemäß einem der vorhergehenden Ansprüche beinhaltet.

## Revendications

1. Canister (10), pour filtrer de la vapeur de carburant dans la boucle d'aération d'un système de carburant, muni d'un corps de canister (12) formant un contenant pour du matériau formant filtre (13), comme du charbon actif, le canister comprenant un raccord (18) pour une conduite d'entrée pour guider de la vapeur de carburant en direction du canister (10), et un piège à liquide (16) pour recueillir du liquide transporté en direction du canister (10) par le biais de la conduite d'entrée, le piège à liquide étant positionné à l'intérieur du corps de canister (12), où le canister (10) est muni d'un moyen de pression (48) destiné à exercer une pression sur le matériau formant filtre (13) afin d'améliorer le compactage de celui-ci, le moyen de pression (18) comprenant un moyen de tension, comme un ressort, et une plaque (57) pour transférer la pression au matériau formant filtre (13), **caractérisé par le fait que** le piège à liquide (16) est solidaire de la plaque (57) et que la plaque (57) est munie d'un contenant (58) pour recevoir du liquide.

2. Canister, selon la revendication 1, dans lequel le piège à carburant (16) a essentiellement la forme d'un boîtier, le boîtier présentant une première ouverture pour raccorder la conduite d'entrée au piège à carburant et une deuxième ouverture pour libérer la vapeur de carburant en direction du matériau formant filtre (13).

3. Canister selon la revendication 1 ou 2, dans lequel le corps de canister (12) est formé en un premier matériau et le piège à carburant (16) est formé en un deuxième matériau.

4. Canister selon la revendication 3, dans lequel le piège à carburant (16) est formé en un matériau à faible perméation.

5. Canister selon n'importe quelle revendication précédente,
dans lequel la plaque (57) est formée en coupe ou en réservoir.

6. Canister selon n'importe quelle revendication précédente,
dans lequel le canister (10) comprend une couche de mousse (14), dans lequel la couche de mousse (14) d'un côté de celle-ci est contiguë à la plaque (57) et du côté opposé de celle-ci est contiguë aux matériaux formant filtre.

7. Canister selon la revendication 6, dans lequel la plaque (57) est munie d'un moyen distant afin de créer un espace ouvert entre la couche de mousse (14) et la surface de la plaque (57) contiguë à la couche de mousse (14).

8. Canister selon n'importe quelle revendication précédente,
dans lequel le piège à liquide (16) a la forme d'un matériau absorbant adapté pour permettre à la vapeur de carburant de passer à travers le matériau absorbant et pour permettre au liquide d'être capturé dans le matériau absorbant.

9. Système de carburant, comprenant un canister selon n'importe quelle revendication précédente.
